Europäisches Patentamt

European Patent Office

Office européen des brevets

(11) Veröffentlichungsnummer: **0 464 877 A2**

## EUROPÄISCHE PATENTANMELDUNG

(21) Anmeldenummer: **91116205.5**

(22) Anmeldetag: **17.11.88**

(51) Int. Cl.⁵: **B65G 21/02**

Diese Anmeldung is am 24 - 09 - 1991 als Teilanmeldung zu der unter INID-Kode 60 erwähnten Anmeldung eingereicht worden.

(30) Priorität: **25.02.88 DE 3805918**

(43) Veröffentlichungstag der Anmeldung:
**08.01.92 Patentblatt 92/02**

(60) Veröffentlichungsnummer der früheren Anmeldung nach Art. 76 EPÜ: **0 329 832**

(84) Benannte Vertragsstaaten:
**AT BE CH DE ES FR GB GR IT LI LU NL SE**

(71) Anmelder: **Geppert, Helmut**
**Niederfeld 12**
**W-5162 Niederzier-Krauthausen(DE)**

(72) Erfinder: **Geppert, Helmut**
**Niederfeld 12**
**W-5162 Niederzier-Krauthausen(DE)**

(74) Vertreter: **Liermann, Manfred**
**Schillingsstrasse 335**
**W-5160 Düren(DE)**

(54) **Rahmen für Bandfördervorrichtungen.**

(57) Die Erfindung beschreibt einen Rahmen für Bandfördervorrichtungen mit im Abstand gegenüberliegenden, zueinander parallel verlaufenden, T-Nuten aufweisenden Längsholmen, die mittels eines tragenden Zwischenstückes einstückig miteinander verbunden sind, wobei an den Längsholmen Lagerschilde für Umlenk- und/oder Antriebswalzen befestigbar sind. Ein solcher Rahmen soll einfach im Aufbau sowie kostengünstig in der Herstellung und Lagerbevorratung sein und es soll eine zerspanende Bearbeitung des Rahmens bei der Fertigung minimiert werden. Dies wird dadurch erreicht, daß mindestens eine der beiden freien Oberflächen des Zwischenstückes als geschlossene Gleitebene für das Förderband oder als Auflage für ein Gleitstück ausgebildet ist und wobei die Längsholme im Bereich ihrer äußeren seitlichen Begrenzungsflächen und in der Höhenlage zwischen den beiden freien Oberflächen des Zwischenstückes je eine sich über die ganze Länge erstreckende T-Nut aufweisen.

EP 0 464 877 A2

Die Erfindung betrifft einen Rahmen für Bandfördervorrichtungen mit im Abstand gegenüberliegenden, zueinander parallel verlaufenden T-Nuten aufweisenden Längsholmen, die mittels eines tragenden Zwischenstückes einstückig miteinander verbunden sind, wobei an den Längsholmen Lagerschilde für Umlenk- und/oder Antriebswalzen befestigbar sind.

Einrichtungen der vorbeschriebenen Art sind bekannt geworden durch die DE-U-87 04 461. Die dort in Figur 1 abgebildete und in der zugehörigen Beschreibung beschriebene Einrichtung baut, bezogen auf die mögliche Förderbreite, noch relativ groß und macht bei einem in der Breite durchgehenden Fördertrum ein eingelegtes Gleitblech notwendig (Seite 10, Abs. 1) Die äußeren, stark durchbrochenen Oberflächen machen, wegen der bei der Lagerung auftretenden Verhakungen der Halbzeuge untereinander, deren Entnahme aus einem Lager schwierig. Mit den zusätzlich bereitzuhaltenden Gleitblechen besteht noch ein zusätzlicher Fertigungs- und Lageraufwand.

Der Erfindung liegt damit die Aufgabe zugrunde, einen Rahmen für Bandfördervorrichtungen der eingangs beschriebenen Art vorzuschlagen, der einfach im Aufbau sowie kostengünstig in der Herstellung und Lagerbevorratung ist, ohne daß wichtige Vorteile bekannter Rahmen verloren gehen. Eine zerspanende Bearbeitung des Rahmens bei der Fertigung soll minimiert werden.

Erfindungsgemäß ist diese Aufgabe dadurch gelöst, daß mindestens eine der beiden freien Oberflächen des Zwischenstückes als geschlossene Gleitfläche für das Förderband oder als Auflage für ein Gleitstück ausgebildet ist und wobei die Längsholme im Bereich ihrer äußeren seitlichen Begrenzungsflächen und in der Höhenlage zwischen den beiden freien Oberflächen des Zwischenstückes je eine sich über die ganze Länge erstreckende T-Nut aufweisen. Wird eine der beiden freien Oberflächen des Zwischenstückes als geschlossene Gleitebene ausgebildet, so kann ein Gleitstück oder Gleitblech vollständig vermieden werden. Es kann diese Ebene aber auch als Auflage für ein Gleitstück oder ein Gleitblech ausgebildet sein, wobei dann der Vorteil besteht, daß dieses Gleitblech als ebenes Blech ausgebildet sein kann und keinerlei zusätzlicher Abkantbearbeitung bedarf. Wenngleich es auch möglich wäre, ein Gleitblech so zu gestalten, daß es die beiden Längsholme außen umfaßt. Das Gleitblech wäre auch in diesem Fall einfacher herzustellen als herkömmliche Gleitbleche. Die von dem Zwischenstück einstückig zusammengehaltenen Längsholme weisen an den seitlichen Begrenzungsflächen je eine in Längsrichtung verlaufende T-Nut auf, wobei diese T-Nut in der Höhenlage so angeordnet ist, daß sie zwischen den beiden freien Oberflächen liegt. Hierdurch entsteht eine Struktur größtmöglicher Stabilität, die dennoch einen sehr einfachen Aufbau aufweisen kann. Ein solches Rahmenteil kann als Halbzeug endlos hergestellt werden und muß dann nur auf Länge abgesägt oder in sonstiger Weise abgelängt werden. Eine spanende Nachbearbeitung kann entfallen oder beschränkt sich allenfalls auf den Bereich der Trennflächen. Die äußeren Durchbrüche der äußeren Oberflächen dieses Bauteils sind gering, so daß keine Verhakungen bei der Lagerung auftreten. Die abgelängten Rahmenbauteile sind problemlos entnehmbar.

Nach einer Ausgestaltung der Erfindung ist vorgeschlagen, daß das Zwischenstück einen gerüstartigen oder kastenartigen Aufbau aufweist. Hierdurch kann das Gewicht und der Werkstoffbedarf minimiert werden, ohne daß sonstige positive Eigenschaften verloren gingen. Hierbei ist von besonderem Vorteil, daß das Zwischenstück einen geschlossenen kastenartigen Aufbau aufweist.

Die Erfindung soll nun anhand der beigefügten Zeichnungen näher erläutert werden.

Es zeigen:

Figur 1    Endstück eines einstückig ausgebildeten Rahmens einer Bandfördervorrichtung in Perspektive

Figur 2    Rahmen ähnlich Figur 1, jedoch mit geändertem Profilaufbau

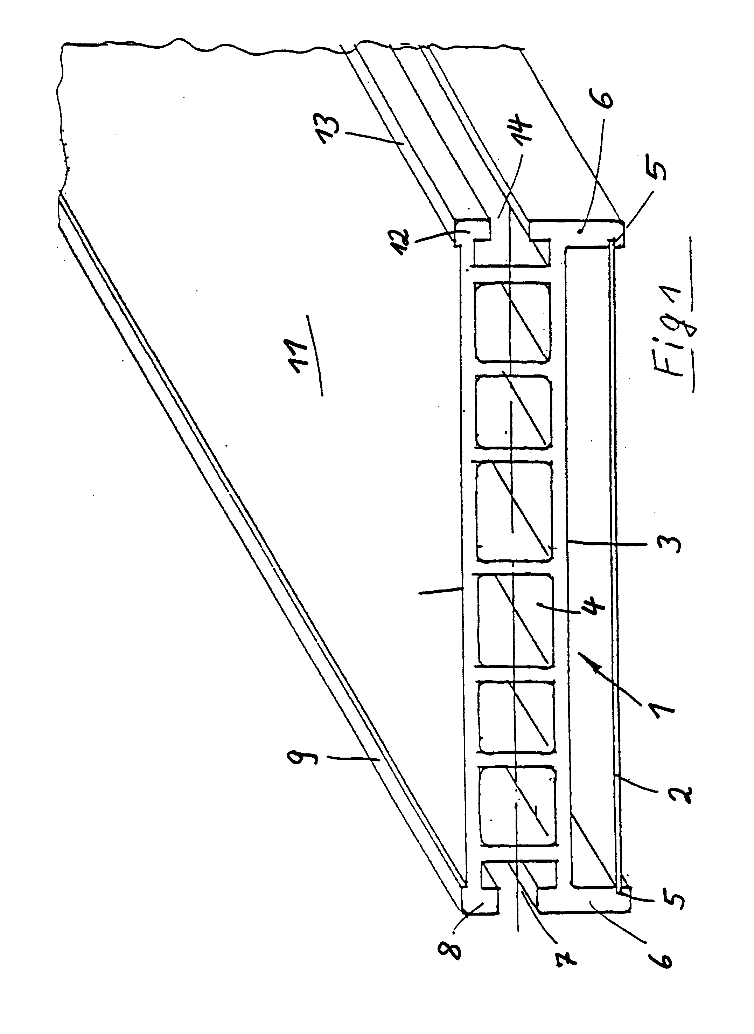

Bei der Ausführungsform nach Fig 1 liegen Längsholme 8 und 12 vor, mit längsverlaufenden T-Nuten 14 und 7. Die Längsholme 8 und 12 können einen in Längsrichtung verlaufenden Flansch 6 aufweisen. Der Flansch 6 nach der Ausführungsform in Figur 1 weist weiter eine schlitzartige und in Längsrichtung verlaufende Nut 5 auf, in die ein unteres Gleitblech 2 eingeschoben ist. Anstelle eines oberen Gleitbleches sind bei der Ausführungsform nach Figur 1 die beiden Längsholme 8 und 12 einstückig mit einem Zwischenstück 1 ausgebildet, das die beiden Längsholme 8 und 12 auf den erforderlichen Abstand hält und diesen miteinander starr verbindet. Dieses Zwischenstück 1 weist vorzugsweise einen gerüstartigen oder auch kastenartigen Aufbau auf mit einer Anzahl von in Längsrichtung verlaufenden Durchbrüchen 4. Hierdurch kann dem Zwischenstück 1 eine ausreichende Dicke und Steifigkeit gegeben werden und es kann dennoch ausreichend leicht gehalten werden. Vorzugsweise weisen hierbei die Durchbrüche 4 einen quadartischen oder rechteckigen Querschnitt auf. Grundsätzlich können sie jedoch auch jeden anderen Querschnitt aufweisen. Die Anzahl der nebeneinander angeordneten Durchbrüche 4 richtet sich nach der Breite des gesamten Rahmens.

Das Zwischenstück 1 weist zwei sich im Abstand gegenüberliegende und vorzugsweise parallel verlaufende Oberflächen 10 und 3 auf, von denen im Ausführungsbeispiel die Oberfläche 10 als Gleitebene 11 für ein Förderband dient. Diese Gleitebene ersetzt das sonst übliche Gleitblech. Es ist jedoch auch möglich, bei Bedarf, auf diese Gleitebene 11 noch ein Gleitblech aufzulegen oder in anderer Weise eine Gleitschicht aufzubringen. Seitlich kann die Gleitebene 11 von zwei Begrenzungsstegen 9 und 13 eingefaßt sein. Diese sind in ihrer Dicke oder Höhe niedriger als die Dicke des verwendeten Förderbandes, so daß Einzelstücke auf dem Förderband, die am Rande etwas überstehen, nicht durch Auflaufen auf diese Begrenzungsstege festgehalten werden. Es ist aber auch möglich, diese Begrenzungsstege 9 und 13 erheblich dicker zu gestalten und als seitliche Begrenzung für die zu fördernden Stücke zu verwenden.

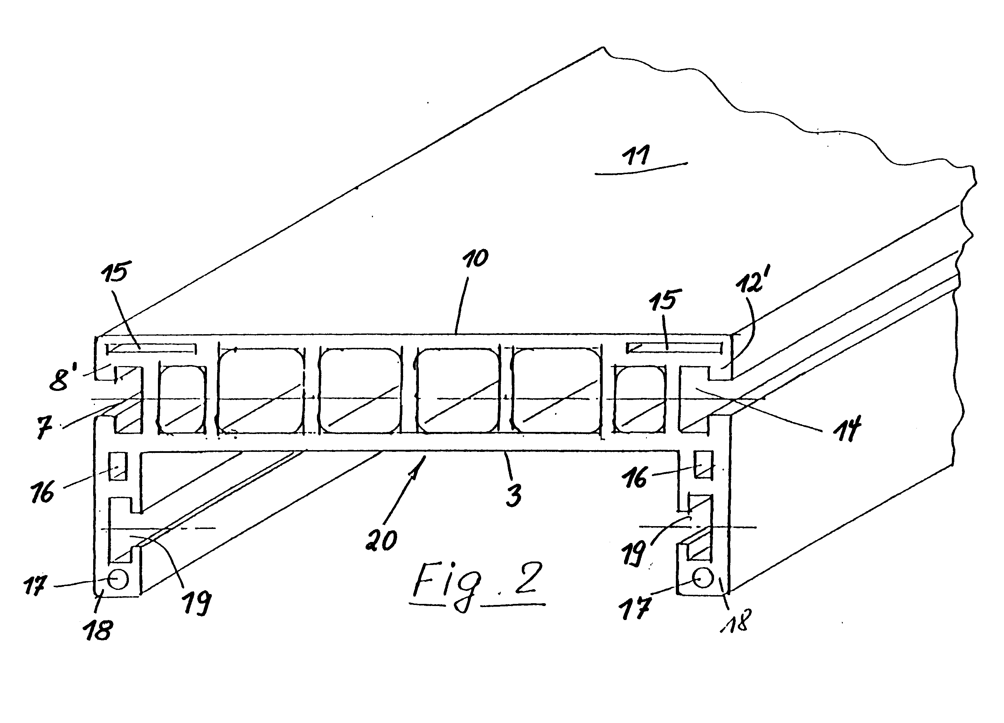

Das in Figur 1 dargestellte und beschriebene Teil kann als Halbzeug hergestellt werden und muß daher lediglich auf Länge abgetrennt werden. Es können dann in üblicher Weise Lagerschilde in entsprechender Anpassung der Befestigungsmittel verwendet werden zur Vervollständigung des Rahmens. Dies gilt auch für das Ausführungsbeispiel nach Fig. 2. Die Längsholme 8' und 12' weisen auch hier oberhalb der T-Nut 7 bzw. 14 je eine rechteckige Ausnehmung 15 zur Einführung eines Spaltbleches auf. Weiter weisen die Längsholme 8' und 12' in Längsrichtung verlaufende Flansche 18 auf. Diese Flansche 18 können auch mit der in Längsrichtung verlaufenden schlitzartigen Nut 5 nach Fig. 1 in der bereits beschriebenen Weise kombiniert werden. Damit sind auch bei einer Ausführungsform nach Fig. 2 alle Aufbauten anbringbar. Auch bei dem Ausführungsbeispiel nach Fig. 2 ist jedoch, wie zu Fig. 1 bereits beschrieben, keine sonst übliche Quertraverse und kein gesondertes Gleitblech mehr vorhanden, sondern es sind diese Teile vielmehr durch das Zwischenstück 20 ersetzt, das durchgehend und einstückig mit den Längsholmen 8' und 12' ausgebildet ist. Es weist ebenfalls vorzugsweise eine gerippte Struktur auf, wie dies bereits zu Fig. 1 beschrieben wurde. Die Gleitebene 11 ist im Unterschied zur Ausführungsform nach Fig. 1 bei der Ausführungsform nach Fig. 2 vollständig randlos gehalten.

Die beschriebenen Längsholme lassen sich leicht als Halbzeuge herstellen und können daher durch einfaches Ablängen für beliebige Rahmenlängen verwendet werden. Die notwendigen Halbzeuge sind kostengünstig lagerbar. Die besondere Querschnittsprofilierung der gen. Längsholme erlaubt einen raschen, problemlosen Anbau aller notwendigen Teile zur Ergänzung des Rahmnes und zur Erstellung eines vollständigen Förderbandes und erlaubt darüberhinaus in Längsrichtung die stufenlose Positionierung der anzubauenden Teile. Gleichzeitig wird es möglich, die zu verwendenden Teile, wie z.B. Gleitbleche, besonders kostengünstig zu gestalten, weil nach oben stehende scharfe Ränder, die eine besondere Nachbearbeitung erfordern, vermieden werden können und weil aufgrund der Konstruktion der Längsholme für Abmessungen der Gleitbleche relativ grobe Toleranzen zugelassen werden können. Vorteilhafterweise aber können bei Bedarf Gleitbleche vollständig vermieden werden. Die Montage ist besonders einfach, weil irgendwelche Ausrichtungen der Gleitbleche entfallen. Darüberhinaus erlauben die verwendeten Profile für die Längsholme auch einen Anbau von bereits vorhandenen Lagerschilden, so daß unter Umständen bei Modernisierungsarbeiten vorhandene Lagerschilde und Antriebseinheiten übernommen werden können. Alle Teile bleiben leicht zugänglich und schnell auswechselbar. Eine Nacharbeit des auf Länge abgelängten Halbzeugs ist nicht erforderlich. Durch die Ablängung allein ist ein Längsholm einsatzfertig.

**Patentansprüche**

1. Rahmen für Bandfördervorrichtungen mit im Abstand gegenüberliegenden, zueinander parallel verlaufenden, T-Nuten aufweisenden Längsholmen, die mittels eines tragenden Zwischenstückes einstückig miteinander verbunden sind, wobei an den Längsholmen Lagerschilde für Umlenk- und/oder Antriebswalzen befestigbar sind, dadurch gekennzeichnet, daß mindestens eine der beiden freien Oberflächen (10,3) des Zwischenstückes (1,20) als geschlossene Gleitebene (11) für das Förderband oder als Auflage für ein Gleitstück ausgebildet ist und wobei die Längsholme (8,12) im Bereich ihrer äußeren seitlichen Begrenzungsflächen und in der Höhenlage zwischen den beiden freien Oberflächen (10,3) des Zwischenstückes (1,20) je eine sich über die ganze Länge erstreckende T-Nut (14,7) aufweisen.

2. Rahmen nach Anspruch 1, dadurch gekennzeichnet, daß das Zwischenstück (1,20) einen gerüstartigen oder kastenartigen Aufbau aufweist.

Fig 1

EP 0 464 877 A2

Fig. 2